# EUROPEAN PATENT SPECIFICATION

(11) **EP 3 965 218 B1**
(45) Date of publication and mention of the grant of the patent: **05.10.2022**
(21) Application number: 20811229.2
(22) Date of filing: 10.07.2020
(51) Int. Cl.: H01M 50/249

(54) **BATTERY CASE, BATTERY CELL, BATTERY, AND METHOD AND DEVICE FOR PREPARING BATTERY CASE**
BATTERIEGEHÄUSE, BATTERIEZELLE, BATTERIE UND VERFAHREN UND VORRICHTUNG ZUR HERSTELLUNG EINES BATTERIEGEHÄUSES
BOÎTIER DE BATTERIE, CELLULE DE BATTERIE, BATTERIE, ET PROCÉDÉ ET DISPOSITIF DE PRÉPARATION DE BOÎTIER DE BATTERIE

(43) Date of publication of application: 09.03.2022
(73) Proprietor: Contemporary Amperex Technology Co., Limited, Jiaocheng District Ningde City, Fujian 352100 (CN)
(72) Inventor: ZHAO, Fenggang, Ningde Fujian 352100 (CN); KE, Haibo, Ningde Fujian 352100 (CN); LI, Quankun, Ningde Fujian 352100 (CN); WU, Ningsheng, Ningde Fujian 352100 (CN); SUN, Zhanyu, Ningde Fujian 352100 (CN)
(74) Representative: Pfenning, Meinig & Partner mbB
(86) International application number: PCT/CN2020/101444
(87) International publication number: WO 2022/006899

(56) References cited:
- EP-A1- 2 273 584
- CN-A- 1 960 027
- CN-A- 102 420 299
- CN-A- 108 134 020
- CN-A- 108 134 020
- CN-Y- 201 181 714
- JP-A- 2000 149 901
- JP-A- 2007 328 940
- JP-U- H0 590 809
- KR-A- 20060 027 270
- US-A1- 2017 033 343

## Description

### TECHNICAL FIELD

The present application relates to the field of energy storage components and parts, and in particular to a battery cell and a battery.

### BACKGROUND

Lithium-ion battery have the advantages of small size, high energy density, long cycle life, long storage time, etc., and are widely applied in some fields of electronic devices, electric vehicles, electric toys, etc., for example, applied to mobile phones, laptops, electric bicycles, electric vehicles, electric airplanes, electric ships, electric toy cars, electric toy ships, electric toy airplanes, electric tools, etc.

With the continuous development of the lithium-ion battery technology, higher requirements are put forward for the safety performance of lithium-ion batteries. A pressure relief mechanism on a lithium-ion battery has an important influence on the safety performance of the lithium-ion battery. For example, when the lithium-ion battery is short-circuited, overcharged, etc., the thermal runaway may occur inside the lithium-ion battery to cause sudden rise of the internal gas pressure, and at this time, a pressure relief mechanism needs to be actuated to release the internal gas pressure to the outside so as to prevent explosion of the lithium-ion battery. Therefore, the design of the pressure relief mechanism is extremely important.

EP2273584A1 discloses a lithium ion battery. The lithium ion battery includes a can, an electrode assembly, and a cap assembly. A relatively thin emergency rupture member is formed on (or at) a bottom (or bottom surface) of the can. The emergency rupture member may have a line shape which is spaced apart from and parallel to a long side of the bottom of the can. Alternatively, the emergency rupture member may be formed on (and/or along) the long side of the bottom.

JP H05 90809U discloses a battery. An electrode group having a negative electrode and the positive electrode is housed in the outer can 2, and an opening of the outer can 2 is closed by a sealing plate. Further, a thin-wall fracture safety valve 1 is provided on the outer can 2 by reducing the portion of the outer can 2, and the thin-wall fracture safety valve 1 can be damaged by internal pressure. The square battery of this invention has a square outer can, the safety valve 1 provided in a part of the ridge other than the sealing portion of the outer can 2 so that the safety valve 1 is broken at the correct working pressure.

KR102006027270A discloses a secondary battery. The secondary battery comprises a can whose upper part is open and which has a concave groove of a certain length and a certain depth at a lower part; an electrode assembly which is mounted in the can and is charged and discharge by a certain voltage; and a cap assembly which is combined to the upper part of the can to prevent the separation of the electrode assembly. Preferably the can comprises a pair of long sides a pair of side-part short sides and a lower short side part, and the concave groove is formed in the longitudinal direction of the long sides.

CN108134020A discloses a safety battery box. The safety battery box comprises a shell, wherein the shell comprises a semi-cylindrical anti-explosion top; the bottom of the anti-explosion top is connected with an air releasing section; side walls are arranged on the side surfaces of the anti-explosion top; the bottom of the air releasing section is connected with a straight panel; and a detonating opening plate is arranged on one side of the air releasing section. When a battery suffers from a dangerous case, the detonating opening plate is detonated firstly to form an air outlet, wherein the detonating direction of the detonating opening plate faces the downward side of the front part of the automobile, so that hurt to the opposite vehicle and person in the automobile can be avoided; in more severe explosion, a detonating ring is damaged, and the whole air releasing section, the lower parts of the side walls and the straight panel fall off, so that a much larger air outlet is formed; and in addition, by virtue of an anti-explosion plate on the upper part, lift-off and scattering of explosives still can be limited effectively.

JP2007328940A discloses a battery. The battery is constituted of a battery case consisting of a battery container of a rectangular parallelopiped shape and a sealing lid 140 to close this, a power generating element housed in the battery case, and a safety valve to release gas to the outside from a valve functioning part 151 or the like when the pressure in the battery case has exceeded a prescribed value. The safety valve 150 has a valve surrounding part 153 at the surrounding of the valve functioning part 151, and the valve surrounding part 153 comprises a thick surrounding part 154 and an annular welding-planned part 156 with a thinner thickness than the thick surrounding part 154. The safety valve 150 is adhered to the sealing lid 140 at a welding portion 170 at which the welding-planned part 156 is melted.

### SUMMARY

The scope of the invention is defined by the appended set of claims.

The present application provides a battery cell and a battery, which could improve the performance of a pressure relief mechanism on the battery box.

According to a first aspect of the present application, a battery call is provided, including: an electrode assembly; a housing being a hollow cuboid and having an opening at one end, wherein the electrode assembly is arranged in the hollow cuboid; a cover plate covering the opening of the housing to hermetically seal the battery box; at least two walls including a first wall and a second wall, the first wall intersecting the second wall, wherein the first wall and the second wall are respectively a bottom wall and a side wall of the housing, and the bottom wall of the housing is a wall opposite to the opening of the housing; and a pressure relief mechanism including a first portion and a second portion connected to each other, the first portion and the second portion being respectively arranged at the first wall and the second wall; wherein the first portion and/or the second portion are configured to be able to fracture, when a thermal runaway occurs inside the battery cell and an internal pressure of the battery cell reaches a threshold, to relieve the internal pressure; a backing plate being located between the electrode assembly and a bottom wall of the housing, wherein the backing plate is provided with a notch corresponding to the first portion such that the backing plate does not block the first portion.

According to the battery cell of the embodiments of the present application, the pressure relief mechanism is arranged at the intersection of any two adjacent walls, i.e., the pressure relief mechanism is located at the intersection of two walls of the battery box so as to increase the area of the pressure relief mechanism, such that when short circuit or overcharge occurs to cause sudden rise of the internal gas pressure and the temperature of the battery box, the pressure relief mechanism on the battery box can fracture in time to release the temperature and the gas pressure to the outside so as to prevent the explosion and fire of the battery. Since the pressure relief mechanism is arranged at the intersection of the two walls and is less affected by the assemblies inside the battery box, for example, is less affected by the drop impact effect of the electrode assembly, it is possible to prevent the pressure relief mechanism from fracturing early. Moreover, the battery box has a small deformation at the intersection of the two walls, which can also ensure that the pressure relief mechanism is not affected by deformation and creep, so as to improve the comprehensive performance of the battery as a whole.

In some embodiments, the first wall is provided with a first opening in a region where the first portion is located, and the first portion covers the first opening; and/or the second wall is provided with a second opening in a region where the second portion is located, and the second portion covers the second opening.

Since the pressure relief mechanism in the embodiments of the present application occupies the first wall and the second wall adjacent to each other, the first opening may be arranged at the position close to the second wall, of the first wall such that the pressure relief mechanism covers the first opening so as to form the first portion of the pressure relief mechanism. Similarly, the second opening is arranged at the position, close to the first wall, of the second wall such that the pressure relief mechanism covers the second opening so as to form the second portion of the pressure relief mechanism. As such, the pressure relief mechanism and the battery box may be separately provided, for example, the pressure relief mechanism and the battery box may have different materials, and the thickness thereof may be different, such that the pressure relief mechanism can be arranged according to the practical requirements.

In some embodiments, the first opening is connected to the second opening.

That is, the first opening in the first wall and the second opening in the second wall are actually one interconnected opening, such that only one opening needs to be machined at the intersection of two adjacent walls of the battery box, and the machining process is convenient.

In some embodiments, the battery box is a hollow cuboid.

Optionally, the battery box may also have other shapes, such as a hollow cylinder or other polyhedrons.

The battery box generally includes two portions, a housing and a cover plate. The housing is a cuboid which is provided with an opening and is hollow, which is convenient for an internal electrode assembly and the like to be accommodated in the housing. The cover plate can cover the opening of the housing, which is convenient for machining and installation.

Considering that electrode terminals are generally arranged on the cover plate, if the pressure relief mechanism is also arranged on the cover plate, when thermal runaway occurs inside the battery cell, the pressure relief mechanism fractures, and a liquid or solid combustible material, which may also contain a conductive material, will be sprayed out while the internal gas pressure of the battery cell is released, resulting in short circuit between the electrode terminals so as to increase the thermal runaway of the battery cell. Moreover, considering that the electrode terminals are generally directed upward, that is, toward a passenger, when the battery is installed in a vehicle, if the pressure relief mechanism is installed on the same side of the electrode terminals, gas flow and other materials released after the pressure relief mechanism fractures will be discharged upward, which may cause burn or scald of the passenger, increasing the risk of the passenger. Therefore, according to the embodiments of the present application, the above problem can be solved by means of arranging the pressure relief mechanism at the intersection of the bottom wall and the side wall.

In some embodiments, the second wall is the side wall with the smallest area among side walls of the housing.

Considering that when a plurality of battery cells are assembled into a battery, the two adjacent battery cells are generally placed such that the walls with a larger area, among the side walls of the housing, of the two battery cells come into contact, if the pressure relief mechanism is partially arranged on the walls with a larger area, the opening of the pressure relief mechanism will be affected, which is not conductive to installation. Therefore, the pressure relief mechanism is installed on the bottom wall and the side wall which has a smaller area, such that the pressure relief mechanism can be opened smoothly without affecting the placement of the plurality of battery cells.

In some embodiments, the first portion and the second portion are perpendicular to each other.

Considering that the battery box is generally a regular polyhedron, such as a cuboid, the two adjacent walls of the battery box are generally perpendicular to each other, and the pressure relief mechanism is arranged at the intersection of the two walls such that the two portions of the pressure relief mechanism can also be arranged perpendicular to each other and be consistent with other portions at the intersection of the two walls. As such, the pressure relief mechanism has a large area, and the overall shape of the battery box can be unchanged, facilitating the installation.

In some embodiments, the first portion and the second portion have the same shape and/or area.

In order to facilitate the machining and installation, the two portions of the pressure relief mechanism may be configured to have the same shape and area, for example, may be configured to be in a semi-circular shape of the same size, or in an elliptical shape of the same size, or in other shapes.

In some embodiments, the bottom wall of the housing has a thickness of 1.5 mm to 2.5 mm; and/or the side wall has a thickness of 1 mm to 1.5 mm.

Since an electrode assembly is accommodated inside the battery box, considering that the weight of the electrode assembly and the possible impact of the electrode assembly on the battery box during use of the battery, the bottom wall of the housing can be configured slightly thicker than the side wall, which can improve the strength of the battery box.

In some embodiments, the pressure relief mechanism has a thickness of 0.4 mm to 0.7 mm.

Since the pressure relief mechanism needs to fracture, when thermal runaway occurs inside the battery cell, to release the internal gas pressure, the thickness of the pressure relief mechanism is generally smaller than that of the battery box itself, that is, the thickness of the pressure relief mechanism itself can be rationally set according to the thickness of the two walls where the pressure relief mechanism is located.

In some embodiments, the pressure relief mechanism has a total area of 600 mm² to 1400 mm².

Considering the strength of the battery box, the area of the pressure relief mechanism should not be too large. However, when thermal runaway occurs inside the battery cell, the pressure relief mechanism needs to be opened in time to release the internal gas pressure as soon as possible to prevent explosion of the battery, and thus the area of the pressure relief mechanism cannot be set too small.

In some embodiments, the first portion is installed to an outer surface of the first wall; and/or the second portion is installed to an outer surface of the second wall.

Since the battery box is generally a hollow cuboid, and the pressure relief mechanism is generally installed at the bottom wall and the side wall of the housing of the battery box, considering the depth of the housing, it is difficult to install the pressure relief mechanism at an inner surface of the housing, such that the installation of the pressure relief mechanism at the outer surface of the battery box is more convenient for machining.

In some embodiments, the outer surface of the first portion is flush with the outer surface of the first wall, and/or the outer surface of the second portion is flush with the outer surface of the second wall.

The outer surface of the pressure relief mechanism is arranged flush with an outer surface of the battery box, which is more convenient for installation and saves space when a plurality of battery cells are assembled into a battery.

In some embodiments, the outer surface of the first wall is provided with a first recess, the first opening is arranged at a bottom wall of the first recess, and the first portion is installed to the bottom wall of the first recess, and/or the outer surface of the second wall is provided with a second recess, the second opening is arranged at a bottom wall of the second recess, and the second portion is installed to the bottom wall of the second recess.

In order to ensure that the outer surface of the pressure relief mechanism is arranged flush with the outer surface of the battery box, by means of arranging a recess in the wall of the battery box, the pressure relief mechanism may be installed at a bottom wall of the recess.

In some embodiments, the first portion and/or the second portion are/is provided with a third recess, and the first portion and/or the second portion are/is configured to fracture at the third recess, when the internal pressure of the battery box reaches the threshold, to relieve the internal pressure.

In order to make the pressure relief mechanism fracture more easily when thermal runaway occurs inside the battery cell, the surface of the pressure relief mechanism may be additionally provided with an indentation, that is, the surface of the pressure relief mechanism is provided with a recess region, and the thickness of the recess is thinner such that the pressure relief mechanism can fracture at the recess.

In some embodiments, the third recess is arranged in the outer surface of the first portion and/or the outer surface of the second portion.

If the recess is arranged inside the battery box, that is, in the inner surface, close to the interior of the battery box, of the pressure relief mechanism, since there is an electrolytic solution in the battery box and the electrolytic solution will be accumulated in the recess and corrode the recess portion, the pressure relief mechanism possibly fractures early. Therefore, the recess is generally arranged in the outer surface of the pressure relief mechanism.

In some embodiments, the thickness of the first portion and/or the second portion at the third recess is 0.1 mm to 0.3 mm.

The thickness of the recess of the pressure relief mechanism may be set according to the thickness of the pressure relief mechanism.

In some embodiments, the battery box further includes: electrode terminals including a positive electrode terminal and a negative electrode terminal both arranged on the cover plate.

In some embodiments, the first wall is provided with a first opening in a region where the first portion is located, with the area of the notch being greater than that of the first opening, and the distance being an edge of the notch and an edge of the first opening being greater than or equal to 1 mm.

When the pressure relief mechanism is partially arranged on the bottom wall, since the bottom wall is also provided with a backing plate, when thermal runaway occurs inside the battery cell, the backing plate can prevent gas from rushing through the pressure relief mechanism. Therefore, in order to make the pressure relief mechanism fracture more easily, a local region of the backing plate can be removed, that is, the backing plate is provided with a notch at the position where the pressure relief mechanism is located, such that the backing plate does not block the pressure relief region.

According to a second aspect of the present application, a battery is provided, including: a plurality of battery cells including at least one battery cell as described in the first aspect mentioned above and any one of possible implementations of the first aspect; a bus component for achieving electrical connection of the plurality of battery cells; and a case for accommodating the plurality of battery cells and the bus component.

According to a third aspect of the present application, a power consumption device is provided, including: the battery as described in the second aspect mentioned above.

The power consumption device may be a vehicle, a ship, or a spacecraft.

According to a fourth aspect of the present application, a method for preparing a battery box is provided, the method including: providing at least two walls including a first wall and a second wall, the first wall intersecting the second wall; and providing a pressure relief mechanism including a first portion and a second portion connected to each other, the first portion and the second portion being respectively arranged on the first wall and the second wall, wherein the first portion and/or the second portion are configured to be able to fracture, when an internal pressure of the battery box reaches a threshold, to relieve the internal pressure.

In some embodiments, the method further includes: arranging a first recess in a region of the outer surface of the first wall where the first portion is located, and arranging a first opening at the bottom wall of the first recess; and/or arranging a second recess in a region of the outer surface of the second wall where the second portion is located, and arranging a second opening at the bottom wall of the second recess.

In some embodiments, the method further includes: installing the first portion to the bottom wall of the first recess and covering the first opening; and/or install the second portion to the bottom wall of the first recess and cover the second opening.

It should be understood that the method for preparing a battery box of the embodiments of the present application can be used for preparing the battery box as described in the first aspect mentioned above and any one of the possible implementations of the first aspect.

According to a fifth aspect of the present application, an apparatus for preparing a battery box is provided, including: a provision module used for: providing at least two walls including a first wall and a second wall, the first wall intersecting the second wall; and providing a pressure relief mechanism including a first portion and a second portion connected to each other, the first portion and the second portion being respectively arranged on the first wall and the second wall, wherein the first portion and/or the second portion are configured to be able to fracture, when an internal pressure of the battery box reaches a threshold, to relieve the internal pressure.

In some embodiments, the apparatus further includes: an arrangement module used for: arranging a first recess in a region of the outer surface of the first wall where the first portion is located, and arranging a first opening at a bottom wall of the first recess, and/or, arranging a second recess in a region of the outer surface of the second wall where the second portion is located, and arranging a second opening at the bottom wall of the second recess.

In some embodiments, the apparatus further includes: an installation module used for: installing the first portion to the bottom wall of the first recess and covering the first opening; and/or installing the second portion to the bottom wall of the first recess and covering the second opening.

It should be understood that the apparatus for preparing a battery box according to the embodiments of the present application can be used to perform the method as described in the fourth aspect mentioned above or any one of possible implementations of the fourth aspect. In particular, the apparatus includes a unit for performing the method as described in the fourth aspect mentioned above or any one of possible implementations of the fourth aspect.

### BRIEF DESCRIPTION OF DRAWINGS

The accompanying drawings described herein are intended to provide a further understanding of the present application, which constitute a part of the present application. Illustrative embodiments of the present application and the description thereof are for explaining the present application and do not constitute an undue limitation of the present application. In the drawings:
Fig. 1 is a schematic contour diagram of some embodiments of a vehicle using a battery of the present application;
Fig. 2 is a schematic structural diagram of some embodiments of the battery of the present application;
Fig. 3 is a schematic structural diagram of some embodiments of a battery module in the battery of the present application;
Fig. 4 is an exploded view of some embodiments of a battery cell of the present application;
Fig. 5 is an exploded view of some embodiments of a battery box of the present application;
Fig. 6 is a cross-sectional view of some embodiments of a housing in the battery box of the present application;
Fig. 7 is a partial enlarged view of the housing of the battery box of the present application shown in Fig. 6;
Figs. 8-13 are partial enlarged views of a pressure relief mechanism of the battery box of the present application shown in Fig. 7;
Fig. 14 is a schematic structural diagram of some embodiments of a backing plate in the battery box of the present application;
Fig. 15 is a schematic flow chart of some embodiments of a method for preparing a battery box of the present application; and
Fig. 16 is a schematic structural diagram of some embodiments of an apparatus for preparing a battery box of the present application.

### DESCRIPTION OF EMBODIMENTS

In order to make objectives, technical solutions, and advantages of embodiments of the present application clearer, the technical solutions in embodiments of the present application will be clearly and completely described below with reference to the accompanying drawings in the embodiments of the present application.

Unless otherwise defined, all technological and scientific terms used herein have the same meanings as those commonly understood by those skilled in the art to which the present application belongs. The terms used in the specification of the present application herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusion. The terms "first", "second" or the like in the specification and the claims of the present application as well as the above drawings are used to distinguish different objects, rather than to describe a specific order or the primarysecondary relationship.

The phrase "embodiments" referred to herein means that the specific features, structures, and characteristics described in conjunction with the embodiments may be are included in at least one embodiment of the present application. The phrase at various locations in the specification does not necessarily refer to the same embodiment, or an independent or alternate embodiment exclusive of another embodiment. Those skilled in the art understand, in explicit and implicit manners, that an embodiment described herein may be combined with another embodiment.

The term "and/or" herein is merely a description of the associated relationship of associated objects, which indicates that there may be three relationships. For example, A and/or B may indicate three situations: A exists alone, both A and B exist, and B exists alone. In addition, the character "/" herein generally indicates that the associated previous and next objects are in the relationship of "or".

In the present application, "a plurality of" means two or more (including two), similarly, "a plurality of groups" means two or more groups (including two groups), and "a plurality of sheets" means two or more sheets (including two sheets).

The battery box, the battery cell, and the battery including a plurality of battery cells described in the embodiments of the present application are all applicable to various apparatuses using a battery, for example, mobile phones, portable devices, laptops, battery driven vehicles, electric vehicles, ships, spacecrafts, electric toys, and electric tools. For example, the spacecrafts include airplanes, rockets, space shuttles, space vehicles, etc.; the electric toys include fixed or movable electric toys, such as game consoles, electric vehicle toys, electric ship toys and electric airplane toys; and the electric tools include electric metal cutting tools, electric grinding tools, electric assembling tools and electric railway tools, such as electric drills, electric grinders, electric spanners, electric screwdrivers, electric hammers, electric impact drills, concrete vibrators and electric planers.

The battery box, the battery cell, and the battery including a plurality of battery cells described in the embodiments of the present application are not only applicable to the devices described above, but also applicable to all devices using a battery, but for brevity, the following embodiments are all described taking an electric vehicle as an example.

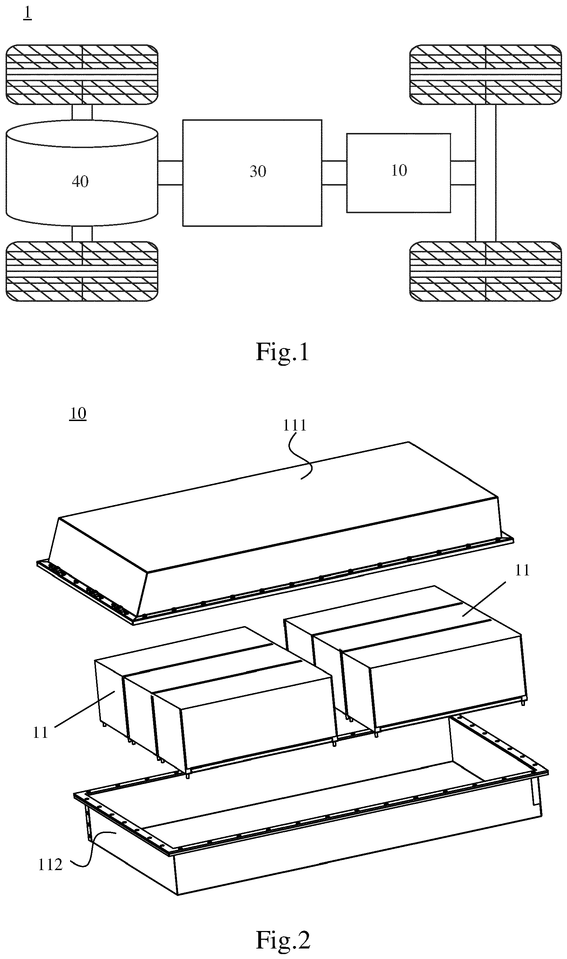

For example, as shown in Fig. 1, which is a schematic structural diagram of a vehicle 1 according to an embodiment of the present application, the vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a battery 10. The battery 10 may be a battery pack or a battery module. For example, the battery 10 may be arranged at the bottom or the head or the tail of the vehicle 1. The vehicle 1 may also be internally provided with a controller 30 and a motor 40. The battery 10 may be used for power supply to the vehicle 1. For example, the battery 10 may serve as an operation power source of the vehicle 1, and used for the circuitry of the vehicle 1, for example, for the working power demand of the vehicle 1 during the start-up, navigation and running. In another embodiment of the present application, the battery 10 can be used not only as an operation power source of the vehicle 1, but also as a driving power source of the vehicle 1 to provide driving power for the vehicle 1 instead of or partially instead of fuel or natural gas.

In order to meet different power demands, the battery 10 may include one or more battery modules (or may also be referred to as battery units), wherein the plurality of battery modules may be in a series connection, or in a parallel connection, or in a series-parallel connection which refers to a mixed series and parallel connection. For example, as shown in Fig. 2, which is a schematic structural diagram of a battery 10 of another embodiment of the present application, the battery 10 includes a first cover 111, a second cover 112 and a plurality of battery modules 11, wherein the shapes of the first cover 111 and the second cover 112 may be determined according to the combined shape of the one or more battery modules 11. Each of the first cover 111 and the second cover 112 has an opening, for example, each of the first cover 111 and the second cover 112 may be a hollow cuboid and has only one face as an open face, that is, this face does not have a housing wall so as to cause communication between the inside and the outside of the housing, the first cover 111 and the second cover 112 are fastened to each other at the openings to form a closed shell of the battery 10, and the one or more battery modules 11 are in a parallel connection or in a series connection or in a series-parallel connection to each other and then are placed in the shell formed after the first cover 111 and the second cover 112 are fastened together.

In another embodiment of the present application, when the battery 10 includes one battery module 11, the battery module 11 is placed in the shell formed after the first cover 111 and the second cover 112 are fastened together.

The electric power generated by the one or more battery modules 11 is drawn out through the shell via an electrically conductive mechanism (not shown).

In addition, the battery 10 may further include other structures, which will not be described in detail herein. For example, the battery 10 may further include a bus component for achieving electrical connection among a plurality of battery cells (not shown). For another example, the battery 10 may further include a cooling component, which is used for holding a cooling medium to cool one or more battery modules 11, but the embodiments of the present application are not limited thereto.

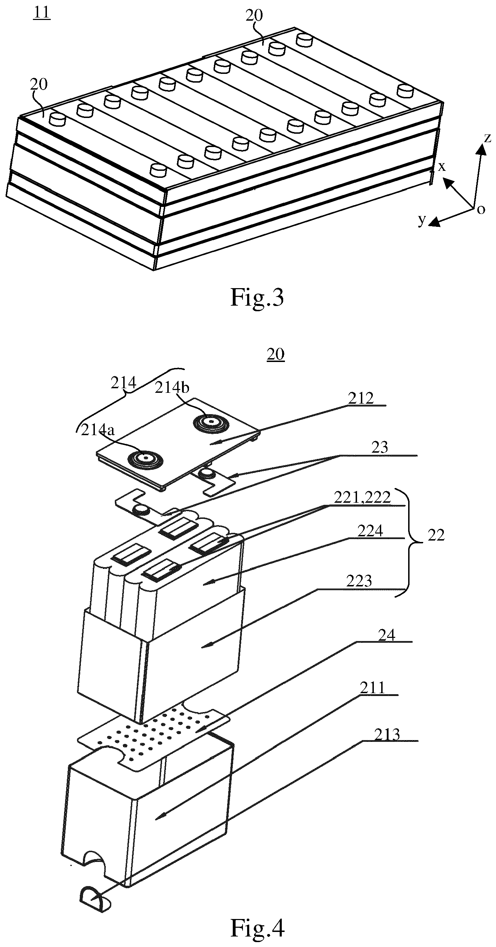

According to the different power demands, the battery module 11 may include one or more battery cells. For example, as shown in Fig. 3, one battery module 11 may include a plurality of battery cells 20, and the plurality of battery cells 20 may be in a series connection, in a parallel connection or in a parallel-series connection to achieve larger capacity or power. Moreover, the number of the battery cells 20 included in one battery module 11 may be set to any value. Each battery cell 20 may include a lithium-ion secondary battery, a lithium-ion primary battery, a lithium sulfur battery, a sodium lithium-ion battery, or a magnesium-ion battery, but is not limited thereto. The battery cell 20 may be a cylinder, a flat body, or a cuboid, or in other shapes.

In another embodiment of the present application, a plurality of battery cells 20 may be stacked together, and the plurality of battery cells 20 are in a series connection, in a parallel connection or in a parallel-series connection. In another embodiment of the present application, each battery cell 20 may be square, cylindrical or in other shapes.

Each battery cell 20 may include a battery box and an electrode assembly arranged in the battery box, wherein the battery box may include a housing and a cover plate, the housing may be a hollow cuboid or cube or cylinder, and one of faces of the housing has an opening such that the electrode assembly can be placed into the housing; and the cover plate is connected to the housing at the opening of the housing to form a closed battery box of the battery cell 20, and the housing may be filled with an electrolytic solution.

In addition, the battery box further includes two electrode terminals, which are generally arranged on the cover plate and are connected to the electrode assembly; and the flat plate face of the cover plate may further be provided with a pressure relief mechanism, which may be part of the flat plate face of the cover plate or may be welded to the flat plate face of the cover plate. In a normal state, the pressure relief mechanism is hermetically combined with the cover plate, that is, the cover plate is connected to the housing at the opening of the housing to form the battery box of the battery cell 20, and the space formed by the battery box is hermetically sealed. When too much gas is generated by the battery cell 20, the gas expands such that the gas pressure in the battery box increases to exceed a preset value, the pressure relief mechanism can fracture to cause communication between the inside and the outside of the battery box, and the gas is released to the outside through the fracture of the pressure relief mechanism, thereby avoiding explosion.

In an existing battery cell, a pressure relief mechanism is generally arranged on a cover plate and is located on the same side as an electrode terminal, such that when thermal runaway occurs inside the battery cell, the pressure relief mechanism fractures, and a liquid or solid combustible material, which may also contain a conductive material, will be sprayed out while the internal gas pressure of the battery cell is released, resulting in short circuit between the electrode terminals. Moreover, considering that the electrode terminals are generally directed upward, that is, toward a passenger, when the battery is installed in a vehicle, if the pressure relief mechanism is installed on the same side of the electrode terminals, gas flow and other materials released after the pressure relief mechanism fractures will be discharged upward, which may cause burn or scald of the passenger, increasing the risk of the passenger. Therefore, it can be conceived that the pressure relief mechanism is installed at other positions, for example, installed on the housing below the cover plate, such as installed on the bottom wall of the housing, so as to solve the problems mentioned above.

However, if the pressure relief mechanism is installed on the bottom wall of the housing, since the housing has a hollow structure with an opening at one end, and the pressure relief mechanism is generally sheet-shaped, it may be inconvenient to install the pressure relief mechanism on the housing, especially when the pressure relief mechanism is installed on the bottom wall, opposite to the opening, of the housing, due to the limitation of the depth of the housing, it is difficult to directly weld the sheet-shaped pressure relief mechanism to the bottom wall. In addition, the strength of the pressure relief mechanism should also be considered. For example, if the pressure relief mechanism is installed on the bottom wall of the housing, it is also necessary to consider the pressure of the internal electrode assembly on the pressure relief mechanism. For example, for a battery installed inside a vehicle, since the vehicle bumps during traveling, the electrode assembly will apply pressure to the bottom wall of the housing, so the pressure relief mechanism needs to have certain strength. For another example, the housing of the battery is generally an aluminum housing. In the cycle life of the electrode assembly, the battery normally generate gas inside during the charging and discharging process, resulting in deformation of the aluminum housing and in turn affecting the creep of the pressure relief mechanism at the indentation, which may cause the pressure relief mechanism to open early and in turn shorten the service life of the battery. Moreover, due to the limited volume of the housing, the area of the pressure relief mechanism arranged at the bottom wall of the housing should not be too large, so there may be problems such as insufficient gas discharge area, low gas discharge speed and poor gas discharge, and the pressure relief mechanism is not easy to open, which is prone to the risk of explosion and fire.

Therefore, the embodiments of the present application provides a battery box and a battery with a pressure relief mechanism, which can solve the above problems regarding the installation, strength, etc. of the pressure relief mechanism. Detailed description will be made below with reference to the accompanying drawings.

Specifically, still taking the embodiment as shown in Figs. 1-3 as an example, Fig. 4 shows an embodiment of the battery cell 20 according to the embodiments of the present application. As shown in Fig. 4, the battery cell 20 includes a battery box (not shown), one or more electrode assemblies 22, and a connecting member 23, wherein the battery box in the embodiments of the present application includes a housing 211 and a cover plate 212.

Specifically, as shown in Fig. 4, the shape of the housing 211 included in the battery box of the battery cell 20 may be determined according to the shape of the one or more electrode assemblies 22 after being combined, for example, the housing 211 may be a hollow cuboid or cube or cylinder, and one of faces of the housing 211 has an opening such that the one or more electrode assemblies 22 can be placed in the housing 211. For example, when the housing 211 is a hollow cuboid or cube, one of the flat faces of the housing 211 is an open face, that is, the flat face does not have a housing wall so as to cause communication between the inside and the outside of the housing 211, and when the housing 211 may be a hollow cylinder, the circular side face of the housing 211 is an open face, that is, the circular side face does not have a housing wall so as to cause communication between the inside and the outside of the housing 211. The cover plate 212 is connected to the housing 211 at the opening of the housing 211 to form a closed battery box, and the housing 211 is filled with the electrolytic solution.

As shown in Fig. 4, the battery box of the battery cell 20 may further include two electrode terminals 214, and the two electrode terminals 214 may be arranged on the cover plate 212. The cover plate 212 is generally in the shape of a flat plate, and the two electrode terminals 214 are located on the flat plate face of the cover plate 212 and penetrates the flat plate face of the cover plate 212. The two electrode terminals 214 are respectively a positive electrode terminal 214a and a negative electrode terminal 214b, and the electrode terminals 214 are each provided with a connecting member 23, which is also referred to as a current collecting member 23, or a copper-aluminum adapter plate 23, which is located between the cover plate 212 and the electrode assembly 22.

As shown in Fig. 4, each electrode assembly 22 may specifically include at least one positive electrode tab 221 and at least one negative electrode tab 222. In addition, the electrode assembly 22 may further include a bare cell and an insulation sheet wrapping the bare cell, with the specific positions of the positive electrode tab 221 and the negative electrode tab 222 being not distinguished in Fig. 4. The positive electrode tab 221 of the one or more electrode assemblies 22 is connected to one electrode terminal via a connecting member 23, and the negative electrode tab 222 of the one or more electrode assemblies 22 is connected to another electrode terminal via another connecting member 23. For example, the positive electrode terminal 214a is connected to the positive electrode tab 221 via a connecting member 23, and the negative electrode terminal 214b is connected to the negative electrode tab 222 via another connecting member 23.

In the battery cell 20, according to the practical requirements, single or multiple electrode assemblies 22 may be provided. As shown in Fig. 4, at least two independent electrode assemblies 22 are provided in the battery cell 20.

In this battery cell 20, the electrode assembly 22 may have a winding structure or may have a laminated structure, and the embodiments of the present application are not limited thereto.

As shown in Fig. 4, the battery cell 20 of the embodiments of the present application may also include a backing plate 24. The backing plate 24 is located between the electrode assembly 22 and the bottom wall of the housing 211, can support the electrode assembly 22, and can also effectively prevent the electrode assembly 22 from interfering with round corners at the periphery of the bottom wall of the housing 211. The shape of the backing plate 24 in the embodiments of the present application can be set according to the practical applications, for example, as shown in Fig. 4, the shape of the backing plate 24 may be consistent with the shape of the bottom wall and set to be a cuboid. In addition, the backing plate 24 may be provided with one or more through holes, for example, as shown in Fig. 4, the backing plate 24 may be provided with a plurality of through holes arranged uniformly or symmetrically so as to cause communication between the spaces of upper and lower surfaces of the backing plate 24, such that the gas, generated inside the electrolytic solution and the electrode assembly 22, and the electrolytic solution can freely pass through the backing plate 24 to facilitate the guiding of liquid and gas.

In the embodiments of the present application, the backing plate 24 has a thickness generally set to 0.3-5 mm, is preferably an insulation component, but may also not be insulated. For example, the material of the backing plate 24 may be PP, PE, PET, PPS, Teflon, stainless steel, aluminum, and other materials that are resistant to electrolytic solutions and are insulating, wherein the plastic material, such as PP, PE, PET or PPS, may be a fireproof material, and the surface of the metal material, such as aluminum or stainless steel, may be anodized for insulation.

In addition, the battery cell 20 in the embodiments of the present application may also include other components. For example, the battery cell 20 may further include at least one of a top cover patch, a sealing nail, and a plastic nail, wherein the top cover patch, the sealing nail and the plastic nail may be installed on the cover plate 212. In addition, the battery cell 20 may also include a blue film, which is arranged on the outer surface of the battery housing 211 to achieve the effects of insulation and protecting the battery cell. However, the embodiments of the present application are not limited thereto.

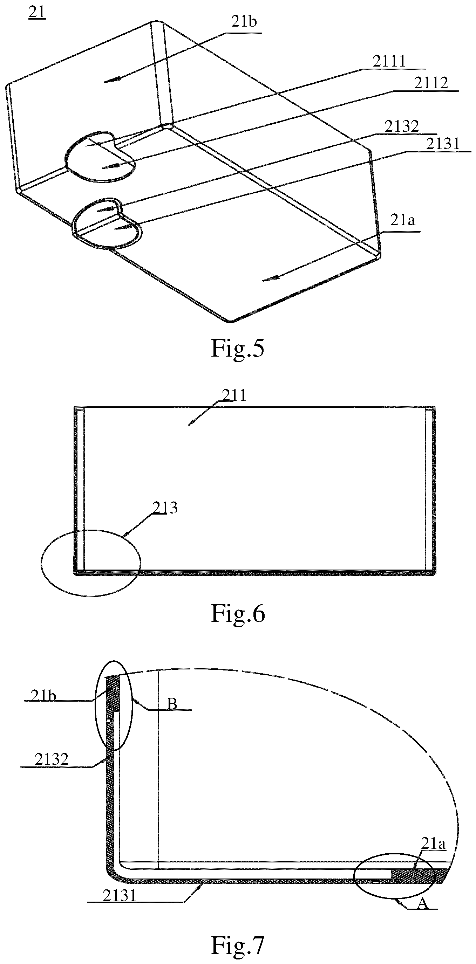

In the embodiments of the present application, the battery box of the battery cell 20 further includes a pressure relief mechanism 213. The pressure relief mechanism 213 may be located on any two adjacent walls of the battery box. Specifically, the battery box of the battery cell 20 shown in Fig. 4 includes a housing 211 and a cover plate 212. Here, the case where the housing 211 is a hollow cuboid is taken as an example for description, and the battery box is also a hollow cuboid. Since a cuboid (i.e., hexahedral) battery box is taken as an example for description here, the battery box includes six walls (or six faces). For example, Fig. 5 shows any three adjacent walls of the battery box 21, including the housing 211 and the cover plate 212, in the embodiments of the present application, and the pressure relief mechanism 213 in the embodiments of the present application is arranged on any two adjacent walls of the battery box 21, for example, the example in which the pressure relief mechanism 213 may be arranged on a bottom wall and a side wall of the housing 211, but the embodiments of the present application are not limited thereto.

Specifically, as shown in Fig. 5, the battery box 21 in the embodiments of the present application includes at least two walls which, for any two adjacent walls therein, are referred to herein as a first wall 21a and a second wall 21b. That is, the at least two walls of the battery box 21 includes a first wall 21a and a second wall 21b, the first wall 21a intersecting the second wall 21b. The pressure relief mechanism 213 in the embodiments of the present application includes a first portion 2131 and a second portion 2132 connected to each other, wherein the first portion 2131 is arranged on the first wall 21a, and the second portion 2132 is arranged on the second wall 21b. That is, the pressure relief mechanism 213 may be bent to form the first portion 2131 and the second portion 2132 which are respectively arranged on the first wall 21a and the second wall 21b. The pressure relief mechanism 213 is arranged on the two walls, and accordingly, for the two portions of the pressure relief mechanism 213, the first portion 2131 and/or the second portion 2132 are/is configured to be able to fracture, when the internal pressure of the battery box 21 reaches the threshold, to relieve the internal pressure.

Therefore, according to the battery box of the embodiments of the present application, the pressure relief mechanism is arranged at the intersection of any two adjacent walls, that is, the pressure relief mechanism is located at the intersection of two walls of the battery box, which can increase the total area of the pressure relief mechanism as compared with the arrangement on only one wall, such that when short circuit or overcharge occurs to cause sudden rise of the temperature and gas pressure inside the battery box, the pressure relief mechanism on the battery box can fracture in time from the two portions corresponding to the two walls so as to release temperature and the gas pressure to the outside, thereby preventing explosion and fire of the battery. In addition, since the pressure relief mechanism is arranged at the intersection of the two walls and is less affected by the assemblies inside the battery box, for example, is less affected by the drop impact effect of the electrode assembly, it is possible to prevent the pressure relief mechanism from fracturing early. Moreover, the battery box has a small deformation at the intersection of the two walls, which can also ensure that the pressure relief mechanism is not affected by deformation and creep, so as to improve the comprehensive performance of the battery as a whole.

It should be understood that the arrangement of the pressure relief mechanism 213 on the first wall 21a and the second wall 21b in the embodiments of the present application may be in various ways and that the first portion 2131 and the second portion 2132 of the pressure relief mechanism 213 may be machined in the same way or in different ways. However, in order to facilitate machining, the first portion 2131 and the second portion 2132 of the pressure relief mechanism 213 are generally machined in a same way, and in the embodiments of the present application, the case where the first portion 2131 and the second portion 2132 of the pressure relief mechanism 213 are generally machined in the same way is taken as an example for description, but the embodiments of the present application are not limited thereto.

For example, the arrangement of the pressure relief mechanism 213 on the first wall 21a and the second wall 21b may include: the pressure relief mechanism 213, the first wall 21a and the second wall 21b may be integrally formed, that is, the corresponding regions of the first wall 21a and the second wall 21b are directly thinned to form the pressure relief mechanism 213. However, considering that if the first wall 21a and the second wall 21b are the bottom wall and the side wall of the housing 211, since the housing 211 has a hollow structure, it is difficult to achieve local thinning for the bottom wall and the side wall. Therefore, the arrangement of the pressure relief mechanism 213 on the first wall 21a and the second wall 21b may further includes: the first wall 21a and the second wall 21b are respectively provided with an opening to enable the pressure relief mechanism 213 to cover the open area.

Specifically, as shown in Fig. 5, the first wall 21a is provided with a first opening 2111 in a region where the first portion 2131 is located, and the first portion 2131 covers the first opening 2111; and similarly, the second wall 21b is provided with a second opening 2112 in a region where the second portion 2132 is located, and the second portion 2132 covers the second opening 2112. That is, the pressure relief mechanism 213 is not integrally formed with respect to the housing 211 of the battery box 21. As such, the pressure relief mechanism 213 and the battery box 21 may be separately arranged, for example, the pressure relief mechanism 213 and the battery box 21 may have different materials, and the thickness thereof may be different, such that the pressure relief mechanism 213 can be arranged according to the practical requirements.

Considering that the first portion 2131 and the second portion 2132 of the pressure relief mechanism 213 are connected to each other, in order to facilitate machining, the first opening 2111 and the second opening 2112 may also be connected to each other, for example, as shown in Fig. 5. That is, the first opening 2111 in the first wall 21a and the second opening 2112 in the second wall 21b are actually one interconnected opening, such that only one opening needs to be machined at the intersection of the two adjacent walls of the battery box 21, and the machining process is convenient.

In addition, the first portion 2131 and the second portion 2132 of the pressure relief mechanism 213 in the embodiments of the present application may also be connected to each other, so the pressure relief mechanism 213 before installation may have a sheet-like structure. When the pressure relief mechanism 213 is installed, taking the installation of the pressure relief mechanism on the bottom wall and the side wall of the housing 211 as an example, the bottom surface may be firstly welded, that is, the first portion 2131 of the pressure relief mechanism 213 is firstly welded to the bottom wall, the pressure relief mechanism 213 is then bent to form the second portion 2132, and the second portion 2132 is welded to the side wall. As such, the machining is more convenient and efficient.

In the embodiments of the present application, the battery box 21 has a hexahedral structure, so the first wall 21a and the second wall 21b are perpendicular to each other, and accordingly, as shown in Fig. 5, the first portion 2131 and the second portion 2132 of the pressure relief mechanism 213 may also be arranged perpendicular to each other, such that the pressure relief mechanism 213 and the rest of the battery box 21 may still form a complete hexahedron.

It should be understood that, considering that the electrode terminals 214 are generally arranged on the cover plate 212, if the pressure relief mechanism 213 is also arranged on the cover plate 212, when thermal runaway occurs inside the battery cell 20, the pressure relief mechanism 213 fractures, and a liquid or solid combustible material, which may also contain a conductive material, will be sprayed out while the internal gas pressure of the battery cell is released, resulting in short circuit between the electrode terminals 214. Moreover, considering that the electrode terminals 214 are generally directed upward, that is, toward a passenger, when the battery is installed in a vehicle, if the pressure relief mechanism 213 is installed on the same side of the electrode terminals 214, gas flow and other materials released after the pressure relief mechanism 213 fractures will be discharged upward, which may cause burn or scald of the passenger, increasing the risk of the passenger. Therefore, the pressure relief mechanism 213 of the embodiments of the present application is mainly described by taking the arrangement on the bottom wall and the side wall of the housing 211 of the battery box 21 as an example.

Specifically, as shown in Fig. 6, taking an example in which the housing 211 is a hollow cuboid with an opening at one end, the upper portion of the housing 211 shown in Fig. 6 is open to enable the cover plate 212 to cover the opening of the housing 211. Accordingly, as shown in Fig. 6, the pressure relief mechanism may be arranged at the bottom wall and the side wall of the housing 211, the bottom wall of the housing 211 is a wall opposite to the opening of the housing 211, and the side wall of the housing 211 is a wall adjacent to the opening of the housing 211, that is, the first wall 21a shown in Fig. 5 is the bottom wall of the housing 211 shown in Fig. 6, and the second wall 21b shown in Fig. 5 is the side wall of the housing 211 shown in Fig. 6.

In the embodiments of the present application, the battery box 21 is a cuboid, the housing 211 has four side walls, including two side walls with a larger area and two side walls with a smaller area, and the pressure relief mechanism 213 is generally arranged on the side walls with a smaller area. Considering that when a plurality of battery cells are assembled into a battery, for example, as shown in Fig. 3, for the cuboid battery cells, the two adjacent battery cells are generally placed such that the walls with a larger area in the side walls of the housings of the two battery cells come into contact with each other. Therefore, if the pressure relief mechanism 213 is partially arranged on the side wall with a larger area, when the plurality of battery cells are tightly arranged to be assembled into a battery, it is affected to open the pressure relief mechanism 213, for example, it is necessary to leave a space between the battery cells for the pressure relief mechanism 213 to open, which is not conducive to the installation of the plurality of battery cells. Therefore, the installation of the pressure relief mechanism 213 on a side wall with a smaller area is conductive to the placement of a plurality of battery cells and further increases the energy density of the battery.

It should be understood that since the housing 211 has a hollow structure, due to the affection by the depth thereof, for example, when the pressure relief mechanism 213 is installed at the bottom wall and the side wall, it is difficult to install the pressure relief mechanism 213 at the inner surface of the housing. Therefore, the pressure relief mechanism 213 is generally installed at the outer surface of the housing, that is, the first portion 2131 of the pressure relief mechanism 213 is installed to the outer surface of the first wall 21a; and the second portion 2132 is installed to the outer surface of the second wall 21b.

For ease of description, the pressure relief mechanism 213 shown in Fig. 6 is taken as an example for detailed description, and Fig. 7 is an enlarged view of the pressure relief mechanism 213 shown in Fig. 6. Specifically, as shown in Fig. 7, a step mechanism may be provided at the openings of the first wall 21a and the second wall 21b to install the pressure relief mechanism 213. Specifically, as shown in Fig. 7, the outer surface of the first wall 21a is provided with a first recess, the first opening 2111 is arranged at a bottom wall of the first recess, and the first portion 2131 is installed to the bottom wall of the first recess. That is, the bottom wall of the first recess is provided with the first opening 2111 such that the first wall 21a can form a step structure, and the first portion 2131 is installed to the step structure formed by the bottom wall of the first recess. Similarly, the outer surface of the second wall 21b is provided with a second recess, the second opening 2112 is arranged in a bottom wall of the second recess, and the second portion 2132 is installed to the bottom wall of the second recess. That is, the bottom wall of the second recess is provided with the second opening 2112 such that the second wall 21b can also form a step structure, and the second portion 2132 is installed to the step structure formed by the bottom wall of the second recess. In the embodiments of the present application, the bottom wall of the recess is a wall opposite to the opening of the recess, and similarly, the side wall of the recess is a wall adjacent to the opening of the recess.

The first wall 21a and the second wall 21b of the battery box 21 are provided with recesses to install the pressure relief mechanism 213, such that the outer surface of the pressure relief mechanism 213 can be flush with the outer surface of the battery box 21. For example, as shown in Fig. 7, the outer surface of the first portion 2131 is flush with the outer surface of the first wall 21a. Similarly, the outer surface of the second portion 2132 is flush with the outer surface of the second wall 21b. With the arrangement that the outer surface of the pressure relief mechanism is flush with the outer surface of the battery box, there is no protruding part on the outer surface of the battery box 21, such that when a plurality of battery cells are assembled into a battery, it is not necessary to provide a structure for avoidance of the pressure relief mechanism 213, which is more convenient for the installation of the plurality of battery cells and saves the space.

It should be understood that the shape of the pressure relief mechanism 213 in the embodiments of the present application may be set to be any shape according to the practical applications, wherein in order to facilitate installation, the first portion 2131 and the second portion 2132 of the pressure relief mechanism 213 are generally set to have the same shape and/or the same area. For example, the first portion 2131 and the second portion 2132 may be set to be in a semicircular shape of the same size, or may also be set to be in an elliptical shape of the same size, or may also be set to be in other shapes. For example, the pressure relief mechanism 213 may be set to be racetrackshaped, that is, the pressure relief mechanism 213 is arc-shaped at two ends and is rectangular in the middle, and the pressure relief mechanism 213 is bent from the middle into the first portion 2131 and the second portion 2132.

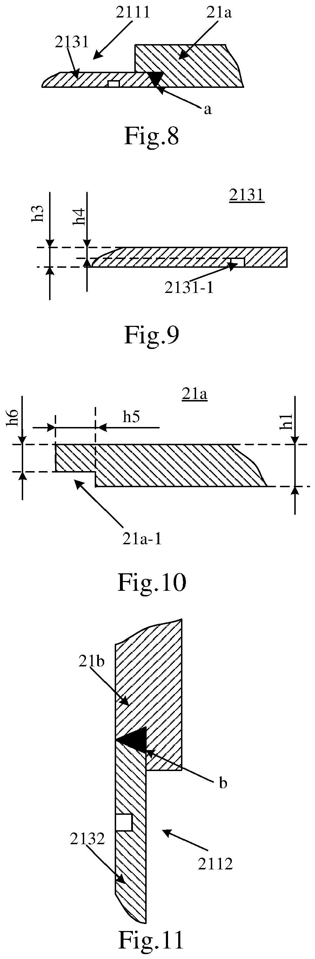

Specifically, for the region A shown in Fig. 7, Fig. 8 shows an enlarged view of the region A, and further, Figs. 9 and 10 respectively show enlarged views of the first wall 21a and the first portion 2131 in the region A, wherein Fig. 8 may be obtained after the installation as shown in Figs. 9 and 10. Specifically, as shown in Figs. 8-10, the first wall 21a is provided with a first recess 21a-1 from the outer surface thereof to the inner surface thereof, and a first opening 2111 is provided at a bottom wall of the first recess 21a-1, such that the first wall 21a forms a step structure as shown in Fig. 10. The pressure relief mechanism 213 generally has a sheet-like structure as shown in Fig. 9, and the first portion 2131 of the pressure relief mechanism 213 is installed on the step structure of the first wall 21a, that is, installed at the bottom wall of the first recess 21a-1 of the first wall 21a. In the embodiments of the present application, the installation of the first portion 2131 at the bottom wall of the first recess 21a-1 of the first wall 21a means that the first portion 2131 is fixed relative to the bottom wall of the first recess 21a-1, for example, as shown in Fig. 8, the first portion 2131 may be placed at the bottom wall of the first recess 21a-1 so as to connect the first portion 2131 with the side wall of the first recess 21a-1 at a position a by means of welding or other ways, for example, by means of laser welding, but the embodiments of the present application are not limited thereto.

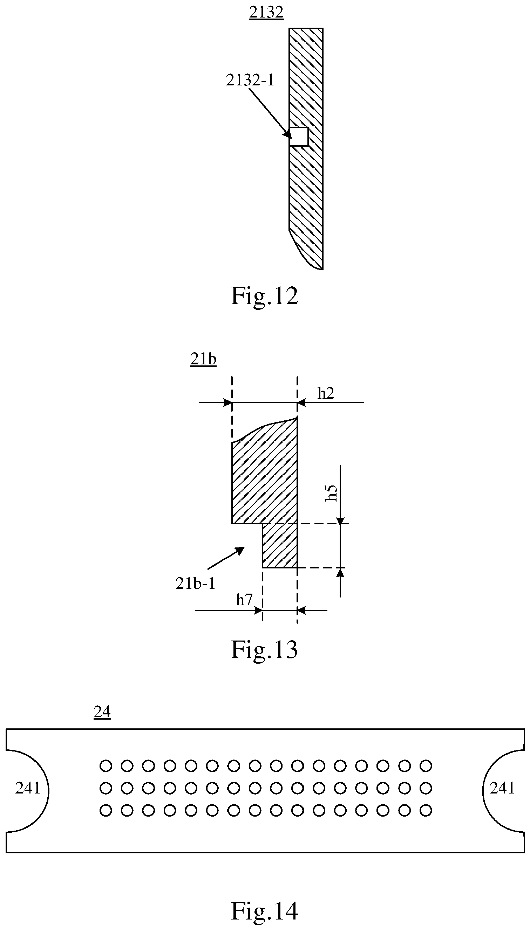

Similarly, regarding the region B depicted in Fig. 7, Fig. 11 shows an enlarged view of the region B, and further, Figs. 12 and 13 respectively show enlarged views of the second wall 21b and the second portion 2132 in the region B, wherein Fig. 11 may be obtained after the installation as shown in Figs. 12 and 13. Specifically, as shown in Figs. 11-13, the second wall 21b is provided with a second recess 21b-1 from the outer surface thereof to the inner surface thereof, and a second opening 2112 is provided at a bottom wall of the second recess 21b-1, such that the second wall 21b forms a step structure as shown in Fig. 13. The pressure relief mechanism 213 generally has a sheet-like structure as shown in Fig. 12, and the second portion 2132 of the pressure relief mechanism 213 is installed on the step structure of the second wall 21b, that is, installed at the bottom wall of the second recess 21b-1 of the second wall 21b. In the embodiments of the present application, the installation of the second portion 2132 at the bottom wall of the second recess 21b-1 of the second wall 21b means that the second portion 2132 is fixed relative to the bottom wall of the second recess 21b-1, for example, as shown in Fig. 11, the second portion 2132 may be placed at the bottom wall of the second recess 21b-1 so as to connect the second portion 2132 with the side wall of the second recess 21b-1 at a position b by means of welding or other ways, but the embodiments of the present application are not limited thereto.

In addition, in the embodiments of the present application, the various dimensions of the pressure relief mechanism 213 may be rationally set according to actual conditions. For example, as shown in Fig. 10, it is assumed here that the first wall 21a is the bottom wall of the housing 211, and the bottom wall of the housing 211 generally has a uniform thickness, for example, the thickness h1 of the bottom wall of the housing 211 may be generally set to 1.5 mm to 2.5 mm, for example, may be set to 1.5 mm, 2 mm, or 2.5 mm; and as shown in Fig. 13, it is assumed that the second wall 21b is the side wall of the housing 211, the side wall of the housing 211 also generally has a uniform thickness, and the thickness h2 of the side wall may be generally set to 1 mm to 1.5 mm, for example, may be set to 1 mm, 1.3 mm or 1.5 mm, but the embodiments of the present application are not limited thereto. Here, in the embodiments of the present application, "mm" represents millimeter.

Accordingly, as shown in Fig. 9, the thickness h3 of the pressure relief mechanism 213 in the embodiment of the present application may be set to 0.4 mm to 0.7 mm, for example, may be set to 0.4 mm, 0.5 mm or 0.7 mm. Considering that the pressure relief mechanism may not have a uniform thickness, the thickness h3 of the pressure relief mechanism 213 represents the thickness of the thickest region of the pressure relief mechanism 213. For example, as shown in Figs. 9 and 12, the first portion 2131 and/or the second portion 2132 may be further provided with a third recess, for example, the first portion 2131 may be provided with a third recess 2131-1, and the second portion 2132 may be provided with a third recess 2132-1, such that when the internal pressure of the battery box 21 reaches the threshold, the first portion 2131 fractures at the third recess 2131-1 and/or the second portion 2132 fractures at the third recess 2132-1 to relieve the internal pressure force. That is, in order to make the pressure relief mechanism fracture more easily when thermal runaway occurs inside the battery cell, the surface of the pressure relief mechanism may be additionally provided with an indentation, that is, the surface of the pressure relief mechanism 213 is provided with regions of the third recesses 2131-1 and 2132-1, and the third recesses 2131-1 and 2132-1 have a thinner thickness. The third recesses 2131-1 and 2132-1 enable the pressure relief mechanism 213 to fracture at a predetermined position to relieve the internal pressure, that is, the fracture position of the pressure relief mechanism is more accurate, and the directional fracture can be achieved.

Considering that if the third recesses 2131-1 and 2132-1 are arranged inside the battery box 21, that is, on the inner surface, close to the interior of the battery box 21, of the pressure relief mechanism 213, since there is an electrolytic solution in the battery box 21 and the electrolytic solution will be accumulated in the third recesses 2131-1 and 2132-1 and corrodes the third recesses 2131-1 and 2132-1, the pressure relief mechanism 213 possibly fractures early. Therefore, the third recesses 2131-1 and 2132-1 are generally arranged in the outer surface of the pressure relief mechanism 213.

As shown in Fig. 9, according to the thickness of the pressure relief mechanism 213, the thickness h4 of the first portion 2131 at the third recess 2131-1 and/or of the second portion 2132 at the third recess 2132-1 is generally set to 0.1 mm to 0.3 mm, for example, 0.1 mm, 0.2 mm or 0.3 mm. In addition, the shapes of the bottom walls of the third recesses 2131-1 and 2132-1 can be flexibly set according to the practical applications, for example, the shapes of the bottom walls of the third recesses 2131-1 and 2132-1 may be set to be strip-shaped, ring-shaped or semi-ring-shaped, or may also be set to be in other patterns, but the embodiments of the present application are not limited thereto.

It should be understood that the relevant dimensions of the first recess 21a-1 and the second recess 21b-1 in the embodiments of the present application may also be set according to the practical applications, and may be set to the same or different values. Specifically, as shown in Figs. 10 and 13, since the first portion 2131 and the second portion 2132 generally have identical structures, the width h5 of the step structure formed corresponding to the first recess 21a-1 and the width h5 of the step structure formed corresponding to the second recess 21b-1 are generally set to the same, for example, the width h5 may be set to 0.4 mm to 0.6 mm, for example, may be set to 0.4 mm, 0.5 mm or 0.6 mm. However, since the bottom wall and the side wall of the housing 211 may have different thicknesses, accordingly, as shown in Fig. 10, for the first wall 21a, the thickness h6 of the step structure formed corresponding to the first recess 21a-1 is generally set to 0.4 mm to 0.6 mm, for example, may be set to 0.4 mm, 0.5 mm or 0.6 mm; and as shown in Fig. 13, for the second wall 21b, the thickness h7 of the step structure formed corresponding to the second recess 21b-1 is generally set to 0.5 mm to 1.5 mm, for example, may be set to 0.5 mm, 1 mm or 1.5 mm, but the embodiments of the present application are not limited thereto.

The area of the pressure relief mechanism 213 in the embodiments of the present application may be set according to the practical applications. For example, considering the strength of the battery box 21, the area of the pressure relief mechanism 213 should not be too large. However, when thermal runaway occurs inside the battery cell, the pressure relief mechanism 213 needs to be opened in time to release the internal gas pressure as soon as possible so as to prevent explosion of the battery. Therefore, the area of the pressure relief mechanism 213 cannot be set too small. For example, the total area of the pressure relief mechanism 213 may be generally set to 600 mm² to 1400 mm², for example, may be set to 600 mm², 1000 mm² or 1400 mm², with the first portion 2131 and the second portion 2132 being half and half. Here, in the embodiments of the present application, "mm²" represents square millimeter.

In the embodiments of the present application, since the pressure relief mechanism 213 in the embodiments of the present application may be partially arranged on the bottom wall of the housing 211, in order to make the backing plate 24 not prevent the gas from rushing through the pressure relief mechanism 213 when thermal runaway occurs inside the battery cell, part of the region of the backing plate 24 may be removed, that is, the backing plate 24 is provided with a notch at the position where the pressure relief mechanism 213 is located, such that the backing plate 24 does not block the pressure relief region. For example, as shown in Fig. 14, taking the rectangular backing plate 24 as an example here, the backing plate 24 may be provided with a notch 241 corresponding to the first portion 2131 of the pressure relief mechanism 213, such that the backing plate 24 does not block the first portion 2131. For example, the shape of the notch 241 in the backing plate 24 is generally consistent with the shape of the first portion 2131 of the pressure relief mechanism 213.

In order to make the backing plate 24 not block the pressure relief mechanism 213 at all, the area of the notch 241 of the backing plate 24 is generally set to be greater than that of the first opening covered by the first portion 2131, for example, the distance from the edge of the notch to the edge of the first opening is greater than or equal to 1 mm.

In order to facilitate the installation, as shown in Fig. 14, the backing plate 24 may be provided with two symmetrical regions of the notch 241, such that when the backing plate 24 is installed, the pressure relief mechanism 213 will not be blocked due to the wrong installation direction.

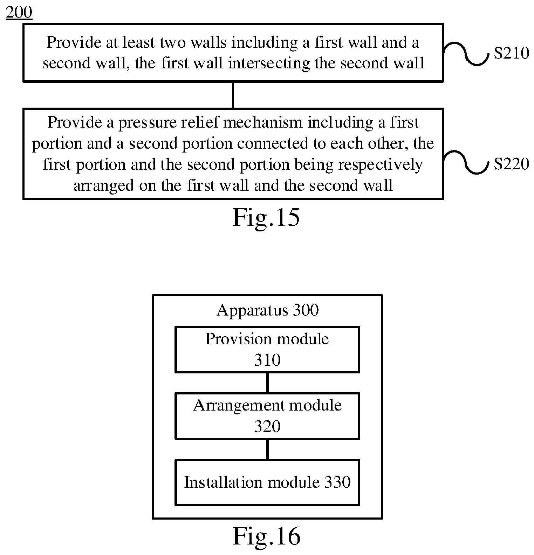

The battery box, the battery cell, and the battery according to the embodiments of the present application are described above with reference to Figs. 1 to 14, and a method and apparatus for preparing a battery box according to the embodiments of the present application will be described below with reference to Figs. 15 and 16.

Specifically, Fig. 15 shows a schematic flow chart of a method 200 for preparing a battery box according to the embodiments of the present application. As shown in Fig. 15, the method 200 includes: S210, providing at least two walls including a first wall and a second wall, the first wall intersecting the second wall; and S220, providing a pressure relief mechanism including a first portion and a second portion connected to each other, the first portion and the second portion being respectively arranged on the first wall and the second wall, wherein the first portion and/or the second portion are configured to be able to fracture, when an internal pressure of the battery box reaches a threshold, to relieve the internal pressure.

Optionally, as an embodiment, the method 200 further includes: arranging a first recess in a region of the outer surface of the first wall where the first portion is located, and arranging a first opening at the bottom wall of the first recess; and/or arranging a second recess in a region of the outer surface of the second wall where the second portion is located, and arranging a second opening at the bottom wall of the second recess.

Optionally, as an embodiment, the method further includes: installing the first portion to the bottom wall of the first recess and covering the first opening; and/or install the second portion to the bottom wall of the first recess and cover the second opening.

It should be understood that the method 200 of the embodiment of the present application may be used for preparing the battery box 21 of the embodiments of the present application, which will not be described here again for brevity.

It should be understood that, in various embodiments of the present application, the size of the sequence number of the foregoing processes does not mean the order of execution, and the order of execution of the processes should be determined by its function and internal logic, and should not constitute any limitation to the implementation process of the embodiments of the present application.

Fig. 16 shows a schematic block diagram of an apparatus 300 for preparing a battery box of the embodiments of the present application. As shown in Fig. 16, the apparatus 300 according to the embodiment of the present application includes: a provision module 310, the provision module 310 is configured to: providing at least two walls including a first wall and a second wall, the first wall intersecting the second wall; and providing a pressure relief mechanism including a first portion and a second portion connected to each other, the first portion and the second portion being respectively arranged on the first wall and the second wall, wherein the first portion and/or the second portion are configured to be able to fracture, when an internal pressure of the battery box reaches a threshold, to relieve the internal pressure.

Optionally, as an embodiment, the apparatus 300 further includes: an arrangement module 320, the arrangement module 320 configured to: arranging a first recess in a region of the outer surface of the first wall where the first portion is located, and arranging a first opening at a bottom wall of the first recess, and/or, arranging a second recess in a region of the outer surface of the second wall where the second portion is located, and arranging a second opening at the bottom wall of the second recess.

Optionally, as an embodiment, the apparatus 300 further includes: an installation module 330, the installation module 330 is configured to: install the first portion to the bottom wall of the first recess and covering the first opening; and/or install the second portion to the bottom wall of the first recess and covering the second opening.

It should be understood that the apparatus 300 according to the embodiments of the present application may correspond to the execution of the method 200 in the embodiments of the present application, and that the foregoing and other operations and/or functions of the units in the apparatus 300 are respectively intended to implement the corresponding process of the method 200 in Fig. 15, which will not be described again here for brevity.

## Claims

1. A battery cell, comprising:
an electrode assembly (22);
a housing (211) being a hollow cuboid and having an opening at one end, wherein the electrode assembly (22) is arranged in the hollow cuboid;
a cover plate (212) covering the opening of the housing (211) to hermetically seal the battery box;
at least two walls including a first wall (21a) and a second wall (21b), the first wall (21a) intersecting the second wall (21b), wherein the first wall (21a) and the second wall (21b) are respectively a bottom wall and a side wall of the housing (211), and the bottom wall of the housing (211) is a wall opposite to the opening of the housing; and
a pressure relief mechanism (213) comprising a first portion (2131) and a second portion (2132) connected to each other, and the first portion (2131) and the second portion (2132) being respectively arranged at the first wall (21a) and the second wall (21b),wherein the first portion (2131) and/or the second portion (2132) are/is configured to be able to fracture, when a thermal runaway occurs inside the battery cell and an internal pressure of the battery call reaches a threshold, to relieve the internal pressure;
**characterized in that** a
backing plate (24) being located between the electrode assembly (22) and a bottom wall of the housing (211), wherein the backing plate (24) is provided with a notch corresponding to the first portion (2131) such that the backing plate (24) does not block the first portion (2131).

2. The battery cell according to claim 1, wherein the first wall (21a) is provided with a first opening (2111) in a region where the first portion (2131) is located, and the first portion (2131) covers the first opening (2111); and/or
the second wall (21b) is provided with a second opening (2112) in a region where the second portion (2132) is located, and the second portion (2132) covers the second opening (2112).

3. The battery cell according to claim 2, wherein the first opening (2111) is connected to the second opening (2112).

4. The battery cell according to claim 2 or 3, wherein the first portion (2131) is installed to an outer surface of the first wall (21a), an outer surface of the first portion (2131) is flush with the outer surface of the first wall (21a); and/or
the second portion (2132) is installed to an outer surface of the second wall (21b) ,an outer surface of the second portion (2132) is flush with the outer surface of the second wall (21b).

5. The battery cell according to any one of claims 2 to 4, wherein an outer surface of the first wall (21a) is provided with a first recess (21a-1), the first opening (2111) is arranged at a bottom wall of the first recess (21a-1), and the first portion (2131) is installed to the bottom wall of the first recess (21a-1), and/or
an outer surface of the second wall (21b) is provided with a second recess (21b-1), the second opening (2112) is arranged at a bottom wall of the second recess (21b-1), and the second portion (2132) is installed to the bottom wall of the second recess (21b-1).

6. The battery cell according to any one of claims 1 to 5, wherein the first portion (2131) and the second portion (2132) are perpendicular to each other;
the first portion (2131) has the same shape and/or area as the second portion (2132).

7. The battery cell according to any one of claims 1 to 6, wherein the pressure relief mechanism (213) has a thickness of 0.4 mm to 0.7 mm;
the pressure relief mechanism (213) has a total area of 600 mm² to 1400 mm².

8. The battery cell according to any one of claims 1 to 7, wherein the first portion (2131) and/or the second portion (2132) are/is provided with a third recess (2131-1, 2132-1), and the first portion (2131) and/or the second portion (2132) are/is configured to fracture at the third recesses (2131-1, 2132-1), when the internal pressure of the battery cell reaches the threshold, to relieve the internal pressure.

9. The battery cell according to claim 8, wherein the third recess (2131-1, 2132-1) are arranged at an outer surface of the first portion (2131) and/or an outer surface of the second portion (2132).

10. The battery cell according to any one of claims 1 to 9, wherein the first wall (21a) is provided with a first opening (2111) in a region where the first portion (2131) is located, with an area of the notch being greater than that of the first opening (2111), and a distance between an edge of the notch and an edge of the first opening (2111) being greater than or equal to 1 mm.

11. A battery, comprising:
a plurality of battery cells including at least one battery cell of any one of claims 1 to 10;
a bus component configured to achieve electrical connection of the plurality of battery cells; and
a case configured to accommodate the plurality of battery cells and the bus component.

## Patentansprüche

1. Batteriezelle, umfassend:
eine Elektrodenanordnung (22),
ein Gehäuse (211), das ein hohler Quader ist und an einem Ende eine Öffnung aufweist, wobei die Elektrodenanordnung (22) in dem hohlen Quader angeordnet ist,
eine Deckplatte (212), welche die Öffnung des Gehäuses (211) bedeckt, um den Batteriekasten hermetisch zu verschließen,
mindestens zwei Wände, die eine erste Wand (21a) und eine zweite Wand (21b) beinhalten, wobei die erste Wand (21a) auf die zweite Wand (21b) trifft, wobei die erste Wand (21a) und die zweite Wand (21b) eine Bodenwand beziehungsweise eine Seitenwand des Gehäuses (211) sind und die Bodenwand des Gehäuses (211) eine Wand gegenüber der Öffnung des Gehäuses ist und
einen Druckentlastungsmechanismus (213), der einen ersten Abschnitt (2131) und einen zweiten Abschnitt (2132) umfasst, die miteinander verbunden sind, und wobei der erste Abschnitt (2131) und der zweite Abschnitt (2132) an der ersten Wand (21a) beziehungsweise der zweiten Wand (21b) angeordnet sind, wobei der erste Abschnitt (2131) und/oder der zweite Abschnitt (2132) so gestaltet ist/sind, dass er/sie zu brechen in der Lage ist/sind, um den Innendruck zu entlasten, wenn ein thermisches Durchgehen im Inneren der Batteriezelle auftritt und ein Innendruck der Batteriezelle einen Schwellenwert erreicht,
**dadurch gekennzeichnet, dass**
sich eine Stützplatte (24) zwischen der Elektrodenanordnung (22) und einer Bodenwand des Gehäuses (211) befindet, wobei die Stützplatte (24) mit einer Kerbe versehen ist, die dem ersten Abschnitt (2131) entspricht, so dass die Stützplatte (24) den ersten Abschnitt (2131) nicht blockiert.

2. Batteriezelle nach Anspruch 1, wobei die erste Wand (21a) mit einer ersten Öffnung (2111) in einem Bereich versehen ist, in dem sich der erste Abschnitt (2131) befindet, und der erste Abschnitt (2131) die erste Öffnung (2111) bedeckt, und/oder
die zweite Wand (21b) mit einer zweiten Öffnung (2112) in einem Bereich versehen ist, in dem sich der zweite Abschnitt (2132) befindet, und der zweite Abschnitt (2132) die zweite Öffnung (2112) bedeckt.

3. Batteriezelle nach Anspruch 2, wobei die erste Öffnung (2111) mit der zweiten Öffnung (2112) verbunden ist.

4. Batteriezelle nach Anspruch 2 oder 3, wobei der erste Abschnitt (2131) an einer Außenoberfläche der ersten Wand (21a) installiert ist, eine Außenoberfläche des ersten Abschnitts (2131) bündig mit der Außenoberfläche der ersten Wand (21a) ist, und/oder
der zweite Abschnitt (2132) an einer Außenoberfläche der zweiten Wand (21b) installiert ist, eine Außenoberfläche des zweiten Abschnitts (2132) bündig mit der Außenoberfläche der zweiten Wand (21b) ist.

5. Batteriezelle nach einem der Ansprüche 2 bis 4, wobei eine Außenoberfläche der ersten Wand (21a) mit einer ersten Vertiefung (21a-1) versehen ist, die erste Öffnung (2111) an einer Bodenwand der ersten Vertiefung (21a-1) angeordnet ist und der erste Abschnitt (2131) an der Bodenwand der ersten Vertiefung (21a-1) installiert ist, und/oder
eine Außenoberfläche der zweiten Wand (21b) mit einer zweiten Vertiefung (21b-1) versehen ist, die zweite Öffnung (2112) an einer Bodenwand der zweiten Vertiefung (21b-1) angeordnet ist und der zweite Abschnitt (2132) an der Bodenwand der zweiten Vertiefung (21b-1) installiert ist.

6. Batteriezelle nach einem der Ansprüche 1 bis 5, wobei der erste Abschnitt (2131) und der zweite Abschnitt (2132) senkrecht zueinander sind,
der erste Abschnitt (2131) die gleiche Form und/oder Fläche wie der zweite Abschnitt (2132) aufweist.

7. Batteriezelle nach einem der Ansprüche 1 bis 6, wobei der Druckentlastungsmechanismus (213) eine Dicke von 0,4 mm bis 0,7 mm aufweist,
der Druckentlastungsmechanismus (213) eine Gesamtfläche von 600 mm² bis 1400 mm² aufweist.

8. Batteriezelle nach einem der Ansprüche 1 bis 7, wobei der erste Abschnitt (2131) und/oder der zweite Abschnitt (2132) mit einer dritten Vertiefung (2131-1, 2132-1) versehen ist/sind und der erste Abschnitt (2131) und/oder der zweite Abschnitt (2132) so gestaltet ist/sind, dass er/sie an der dritten Vertiefung (2131-1, 2132-1) bricht/brechen, um den Innendruck zu entlasten, wenn ein Innendruck der Batteriezelle einen Schwellenwert erreicht.

9. Batteriezelle nach Anspruch 8, wobei die dritte Vertiefung (2131-1, 2132-1) an einer Außenoberfläche des ersten Abschnitts (2131) und/oder einer Außenoberfläche des zweiten Abschnitts (2132) angeordnet ist.

10. Batteriezelle nach einem der Ansprüche 1 bis 9, wobei die erste Wand (21a) mit einer ersten Öffnung (2111) in einem Bereich versehen ist, in dem sich der erste Abschnitt (2131) befindet, wobei eine Fläche der Kerbe größer als die der ersten Öffnung (2111) ist und ein Abstand zwischen einem Rand der Kerbe und einem Rand der ersten Öffnung (2111) größer als oder gleich 1 mm ist.

11. Batterie, umfassend:
eine Mehrzahl von Batteriezellen, die mindestens eine Batteriezelle nach einem der Ansprüche 1 bis 10 beinhaltet,
eine Sammelschienenkomponente, die dazu gestaltet ist, eine elektrische Verbindung der Mehrzahl von Batteriezellen zu erzielen, und
eine Hülle, die dazu gestaltet ist, die Mehrzahl von Batteriezellen und die Sammelschienenkomponente zu beherbergen.

## Revendications

1. Cellule de batterie, comprenant :
un ensemble électrode (22) ;
un logement (211) étant un cuboïde creux et ayant une ouverture à une extrémité, l'ensemble électrode (22) étant agencé dans le cuboïde creux ;
une plaque de couverture (212) couvrant l'ouverture du logement (211) pour sceller hermétiquement la boîte de batterie ;
au moins deux parois incluant une première paroi (21a) et une deuxième paroi (21b), la première paroi (21a) croisant la deuxième paroi (21b), la première paroi (21a) et la deuxième paroi (21b) étant respectivement une paroi inférieure et une paroi latérale du logement (211), et la paroi inférieure du logement (211) étant une paroi opposée à l'ouverture du logement ; et
un mécanisme de détente de pression (213) comprenant une première portion (2131) et une deuxième portion (2132) raccordées l'une à l'autre, et la première portion (2131) et la deuxième portion (2132) étant respectivement agencées au niveau de la première paroi (21a) et de la deuxième paroi (21b), la première portion (2131) et/ou la deuxième portion (2132) étant configurée(s) pour pouvoir se fracturer, lorsqu'un emballement thermique se produit à l'intérieur de la cellule de batterie et qu'une pression interne de la cellule de batterie atteint un seuil, pour soulager la pression interne ;
**caractérisée en ce que**
une plaque de support (24) est située entre l'ensemble électrode (22) et une paroi inférieure du logement (211), la plaque de support (24) étant pourvue d'une encoche correspondant à la première portion (2131) de telle sorte que la plaque de support (24) ne bloque pas la première portion (2131).

2. Cellule de batterie selon la revendication 1, dans laquelle la première paroi (21a) est pourvue d'une première ouverture (2111) dans une région où la première portion (2131) est située, et la première portion (2131) couvre la première ouverture (2111) ; et/ou
la deuxième paroi (21b) est pourvue d'une deuxième ouverture (2112) dans une région où la deuxième portion (2132) est située, et la deuxième portion (2132) couvre la deuxième ouverture (2112).

3. Cellule de batterie selon la revendication 2, dans laquelle la première ouverture (2111) est raccordée à la deuxième ouverture (2112).

4. Cellule de batterie selon la revendication 2 ou la revendication 3, dans laquelle la première portion (2131) est installée sur une surface externe de la première paroi (21a), une surface externe de la première portion (2131) est au même niveau que la surface externe de la première paroi (21a) ; et/ou la deuxième portion (2132) est installée sur une surface externe de la deuxième paroi (21b), une surface externe de la deuxième portion (2132) est au même niveau que la surface externe de la deuxième paroi (21b) .

5. Cellule de batterie selon l'une quelconque des revendications 2 à 4, dans laquelle une surface externe de la première paroi (21a) est pourvue d'un premier évidement (21a-1), la première ouverture (2111) est agencée au niveau d'une paroi inférieure du premier évidement (21a-1), et la première portion (2131) est installée sur la paroi inférieure du premier évidement (21a-1), et/ou
une surface externe de la deuxième paroi (21b) est pourvue d'un deuxième évidement (21b-1), la deuxième ouverture (2112) est agencée au niveau d'une paroi inférieure du deuxième évidement (21b-1), et la deuxième portion (2132) est installée sur la paroi inférieure du deuxième évidement (21b-1).

6. Cellule de batterie selon l'une quelconque des revendications 1 à 5, dans laquelle la première portion (2131) et la deuxième portion (2132) sont perpendiculaires l'une à l'autre ;
la première portion (2131) a la même forme et/ou la même superficie que la deuxième portion (2132).

7. Cellule de batterie selon l'une quelconque des revendications 1 à 6, dans laquelle le mécanisme de décharge de pression (213) a une épaisseur de 0,4 mm à 0,7 mm ;
le mécanisme de détente de pression (213) a une superficie totale de 600 mm² à 1400 mm².

8. Cellule de batterie selon l'une quelconque des revendications 1 à 7, dans laquelle la première portion (2131) et/ou la deuxième portion (2132) sont/est pourvue(s) d'un troisième évidement (2131-1, 2132-1), et la première portion (2131) et/ou la deuxième portion (2132) sont/est configurée(s) pour se fracturer au niveau des troisièmes évidements (2131-1, 2132-1), lorsque la pression interne de la cellule de batterie atteint le seuil, pour soulager la pression interne.

9. Cellule de batterie selon la revendication 8, dans laquelle le troisième évidement (2131-1, 2132-1) est agencé au niveau d'une surface externe de la première portion (2131) et/ou d'une surface externe de la deuxième portion (2132).

10. Cellule de batterie selon l'une quelconque des revendications 1 à 9, dans laquelle la première paroi (21a) est pourvue d'une première ouverture (2111) dans une région où la première portion (2131) est située, une superficie de l'encoche étant supérieure à celle de la première ouverture (2111), et une distance entre un bord de l'encoche et un bord de la première ouverture (2111) étant supérieure ou égale à 1 mm.

11. Batterie, comprenant :
une pluralité de cellules de batterie incluant au moins une cellule de batterie selon l'une quelconque des revendications 1 à 10 ;
un composant de bus configuré pour réaliser une connexion électrique de la pluralité de cellules de batterie ; et
un boîtier configuré pour recevoir la pluralité de cellules de batterie et le composant de bus.
